(19) Europäisches Patentamt
European Patent Office
Office européen des brevets

(11) **EP 2 460 037 B1**

(12) **FASCICULE DE BREVET EUROPEEN**

(45) Date de publication et mention
de la délivrance du brevet:
**18.12.2013 Bulletin 2013/51**

(21) Numéro de dépôt: **10762955.2**

(22) Date de dépôt: **29.07.2010**

(51) Int Cl.:
*G02B 6/124* (2006.01)     *G02B 6/34* (2006.01)
*G02B 27/01* (2006.01)

(86) Numéro de dépôt international:
**PCT/FR2010/051622**

(87) Numéro de publication internationale:
**WO 2011/012825 (03.02.2011 Gazette 2011/05)**

(54) **SYSTEME OPTIQUE PLANAIRE D'IMAGERIE POLYCHROMATIQUE A LARGE CHAMP DE VISION**

EBENES OPTISCHES SYSTEM FÜR POLYCHROME WEITSICHTFELD-BILDGEBUNG

PLANAR OPTICAL SYSTEM FOR WIDE FIELD-OF-VIEW POLYCHROMATIC IMAGING

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **31.07.2009 FR 0955397**

(43) Date de publication de la demande:
**06.06.2012 Bulletin 2012/23**

(73) Titulaire: **Horiba Jobin Yvon S.A.S.**
**91160 Longjumeau (FR)**

(72) Inventeur: **DESSEROUER, Frédéric**
**F-91120 Palaiseau (FR)**

(74) Mandataire: **Coralis Harle**
**14-16, rue Ballu**
**75009 Paris (FR)**

(56) Documents cités:
**US-A- 5 070 488      US-A- 5 315 676**
**US-A1- 2003 202 247      US-A1- 2005 002 611**

- **PARRIAUX O ET AL: "Waveguide excitation by a Gaussian beam and a finite size grating" SENSORS AND ACTUATORS B, ELSEVIER SEQUOIA S.A., LAUSANNE, CH LNKD- DOI: 10.1016/S0925-4005(97)80273-0, vol. 41, no. 1-3, 30 juin 1997 (1997-06-30), pages 23-29, XP004091202 ISSN: 0925-4005**
- **FUMIHIRO SOGAWA ET AL: "FABRICATION OF ABERRATION-FREE FOCUSING GRATING COUPLERS" APPLIED OPTICS, OPTICAL SOCIETY OF AMERICA, US, vol. 29, no. 34, 1 décembre 1990 (1990-12-01), pages 5103-5105, XP000165713 ISSN: 0003-6935**

**Description**

La présente invention concerne un dispositif optique de transport d'image compact, polychromatique et à large champ de vision. Une application de ce dispositif concerne un dispositif de visualisation dit « tête haute » (ou « head-up display » en anglais) qui permet à l'utilisateur de voir dans la même direction à la fois une image projetée et une scène de son environnement. De tels dispositifs sont utilisés en particulier dans des casques pilote ou fantassin, ou encore en réalité virtuelle de manière à ce que l'utilisateur puisse visualiser des informations utiles tout en gardant la tête haute.

Il existe des dispositifs de transport d'image basés sur l'utilisation d'un guide d'onde dans lequel un faisceau d'imagerie est couplé dans le guide d'onde, par exemple via des coupleurs d'entrée/sortie à base de réseaux de diffraction (voir les documents US4711512, US2003/0202247 et US2005/0002611) .

Ainsi le document US4711512 (Upatnieks) décrit un dispositif comprenant un guide d'onde planaire et des coupleurs d'entrée et de sortie à réseaux de diffraction.

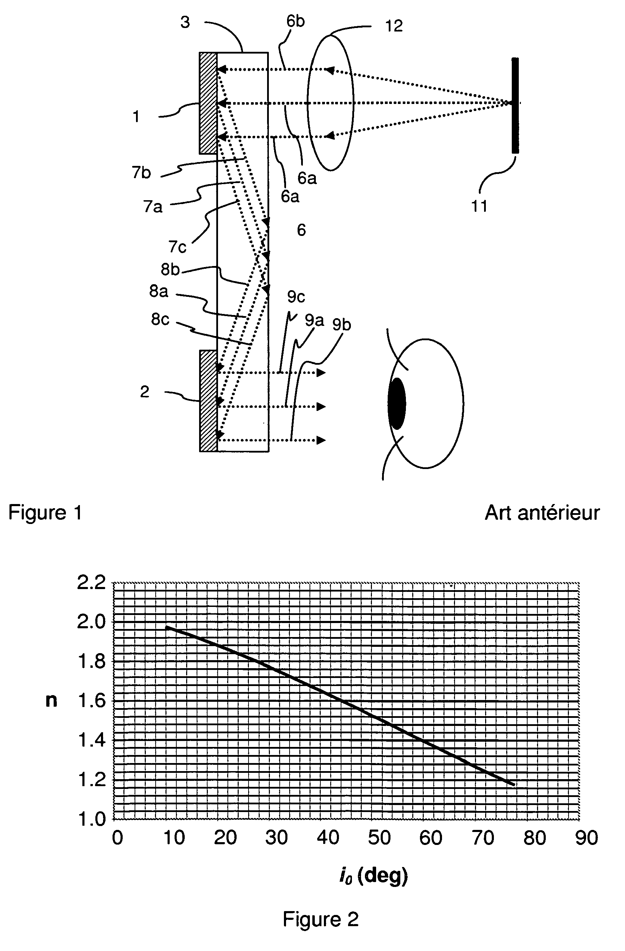

La figure 1 représente schématiquement la structure d'un système de transport d'image à guide d'onde planaire de l'art antérieur. Le système présenté Figure 1 comprend un réseau d'entrée et un réseau de sortie fonctionnant tous les deux en réflexion. Cependant, toutes les combinaisons de réseaux d'entrée/sortie par transmission ou par réflexion sont possibles. Les directions du faisceau d'entrée et du faisceau de sortie forment généralement un angle d'environ 90° avec le guide d'onde planaire, autrement dit un angle moyen d'incidence nul par rapport à la normale à une surface plane du guide d'onde.

Le principe de fonctionnement du dispositif représenté figure 1 est le suivant. Un objet source 11 est au foyer d'un système optique collimateur 12. L'image de l'objet est donc faite à l'infini, c'est-à-dire qu'à chaque point objet correspond une direction angulaire. Pour un point central de l'objet, l'ensemble des ondes planes générées 6a, 6b, 6c entre dans le guide d'onde 3. Le trait 6a représente un faisceau sur l'axe optique de la lentille 12, qui entre dans le guide d'onde planaire sous un angle d'incidence nul. Les faisceaux 6a et 6b représentent l'ouverture angulaire du faisceau d'entrée pour le même point central. Un premier réseau de diffraction d'entrée 1 diffracte l'ensemble des faisceaux autour d'une direction moyenne plus grande que l'angle de réfraction totale dans le guide d'onde. La fonction du premier réseau est de coupler le faisceau incident dans le guide d'onde afin de permettre sa propagation par une ou plusieurs réflexions internes totales le long du guide (faisceaux 7a, 7b, 7c et 8a, 8b, 8c). Un second réseau de diffraction 2 dit de sortie permet d'extraire le(s) faisceau(x) 9a, 9b, 9c hors du guide d'onde. Les deux réseaux 1, 2 ont avantageusement la même densité de traits, ce qui assure une diffraction avec des angles de sortie strictement égaux à ceux d'entrée et ce qui permet au système de restituer une image. L'oeil (ou tout autre dispositif focalisant) permet ensuite de restituer l'image au niveau de la rétine (ou tout autre détecteur). Les directions moyennes du faisceau d'entrée et du faisceau de sortie étant parallèles entre elles, les faisceaux à l'entrée 6, 6a, 6b et à la sortie 9, 9a, 9b du guide se propagent soit dans le même sens soit en sens contraire, permettant ainsi de replier ou décaler latéralement un faisceau optique.

Le dispositif à guide d'onde est un dispositif afocal de grandissement angulaire unitaire, il doit fonctionner sur une certaine plage angulaire, c'est à dire que les ondes planes entrantes ont des angles d'incidence variant sur un intervalle de +/- $\Delta\theta$ autour d'une incidence moyenne nulle. Cet intervalle d'angle est donné par exemple par le champ visuel utile de l'oeil, typiquement une vingtaine à une trentaine de degrés en champ total.

Si on veut faire des images en couleur il faut aussi que le système fonctionne sur une plage spectrale étendue variant de $\lambda_1$ à $\lambda_3$ avec pour longueur d'onde centrale $\lambda_2$.

Or, les systèmes antérieurs ont des limitations sévères de fonctionnement à la fois dans le domaine spectral et angulaire. En effet, le fonctionnement du système nécessite un certain nombre de conditions qui doivent être remplies pour tout angle d'incidence de la plage angulaire et pour toute longueur d'onde du spectre :

- condition de réflexion interne totale dans le guide ;
- existence d'un ordre de diffraction sur le premier réseau avec un angle de diffraction du faisceau diffracté et couplé dans le guide planaire inférieur à un angle de diffraction limite $\gamma$ d'environ 80 degrés.

De plus, pour un dispositif de transport d'image, il faut que :

- le réseau soit efficace dans l'ordre de diffraction utile ;
- les densités de traits soient les plus importantes possibles et travailler uniquement dans le premier ordre de diffraction, pour éviter les images parasites provenant d'autres ordres de diffraction.

Si on applique ces contraintes pour un guide d'onde d'indice n, travaillant à une incidence comprise entre $-\Delta\theta$ et $+\Delta\theta$ sur un domaine spectral $\Delta\lambda=\lambda_3-\lambda_1$, avec un angle $\gamma$ d'incidence limite dans le guide, on arrive à des densités de traits minimales et maximales.

$$N_{min} = \frac{1 + \sin(\Delta\theta)}{\lambda_1}$$

$$N_{max} = \frac{n * \sin(\gamma) - \sin(\Delta\theta)}{\lambda_3}$$

Il ne peut y avoir de solution que si $N_{max} > N_{min}$ ce qui se traduit par une condition sur l'indice du guide d'onde :

$$n \geq \frac{\frac{\lambda_3}{\lambda_1}(1 + \sin(\Delta\theta)) + \sin(\Delta\theta)}{\sin(\gamma)}$$

Dans ce cas on peut choisir une densité de traits moyenne :

$$N = \frac{N_{max} + N_{min}}{2}$$

Faisons l'application des formules ci-dessus pour un système en pleine couleur du rouge au bleu : $\lambda_1$=450 nm, $\lambda_3$=630 nm avec un champ de $\Delta\theta$ de 15 degrés (soit un champ angulaire total de 30 degrés) et un angle limite $\gamma$ égal à 80 degrés :

$$n > \frac{\frac{630}{450}(1 + \sin(15°)) + \sin(15°)}{\sin(80°)} = 2,05$$

Un tel indice optique de guide d'onde est très élevé et peu compatible avec les matériaux courants bas coût. De plus, les réseaux de diffraction sont en contact optique avec le guide d'onde et doivent aussi être fabriqués dans ce matériau très haut indice, ce qui complique énormément leur fabrication. Si n=2,10 pour avoir une légère marge on aboutit à une densité de traits de N=2900 tr/mm : la densité de traits du réseau est une haute densité.

La fabrication d'un tel système est donc très contraignante car elle demande des réseaux de diffraction à haute densité de traits par mm montés optiquement sur un guide d'onde à très haut indice.

Pour une solution industrielle avec un guide d'onde en matériau bas coût (verre ou plastique) et des réseaux de diffraction répliqués avec des résines transparentes de même indice que le guide, cette contrainte de haut indice est problématique.

Le but de l'invention est de fournir un système optique planaire d'imagerie polychromatique à large champ de vision et de préférence plus facile et moins coûteux à fabriquer que les systèmes antérieurs.

A cet effet, l'invention concerne un système optique planaire d'imagerie polychromatique à large champ de vision angulaire comprenant un guide d'onde planaire comprenant deux faces planes et parallèles ayant une épaisseur de l'ordre du millimètre, un coupleur d'entrée comprenant un premier réseau de diffraction, un coupleur de sortie comprenant un second réseau de diffraction, le système optique planaire étant apte à recevoir un faisceau optique incident ayant une largeur spectrale $\Delta\lambda$ ($\Delta\lambda=\lambda_3-\lambda_1$), un champ angulaire $\pm\Delta\theta$ et formant un angle d'incidence moyen $i_0$ avec la normale à une face du guide d'onde, ledit 1er réseau étant apte à coupler ledit faisceau incident dans le guide d'onde planaire en un faisceau apte à se propager dans le guide d'onde par réflexion interne totale sur les faces du guide, et le 2nd réseau étant apte à recevoir le faisceau couplé et à diffracter ledit faisceau couplé hors du guide d'onde en un faisceau de sortie. Selon l'invention, le premier réseau est apte à coupler un faisceau d'entrée d'angle d'incidence moyen

**EP 2 460 037 B1**

$i_0$ compris entre 30 degrés et 60 degrés dans le guide d'onde par diffraction dans l'ordre + 1, ledit faisceau couplé formant un angle d'incidence interne supérieur à l'angle de réflexion totale interne et inférieur à un angle limite $\gamma$, et le second réseau étant apte à recevoir le faisceau couplé et à le diffracter dans l'ordre - 1 hors du guide d'onde sous un angle de sortie moyen $i_1$ par rapport à la normale à une face de sortie du guide d'onde compris entre 30 degrés et 60 degrés.

Selon des aspects particuliers de l'invention :

- le 1er et le 2nd réseau sont des réseaux de diffraction à faible densité de traits, ayant un pas supérieur à la longueur d'onde d'utilisation ($\lambda_1$, $\lambda_3$) ;
- la densité de traits est inférieure à 1200 traits /mm ;
- l'indice de réfraction du guide d'onde est inférieur à 1,65 sur le domaine spectral [$\lambda_1$, $\lambda_3$];
- la densité de traits des réseaux est égale à N=1000 tr/mm, l'indice de réfraction du guide égal à 1,6 et l'angle d'incidence moyen $i_0$ du faisceau incident est de 50 degrés, l'angle limite $\gamma$ est de 80 degrés, la plage spectrale comprise au minimum entre 450 nm et 630 nm et le champ angulaire 2.$\Delta\theta$ est de +/- 15 degrés ;
- le 1er et le 2nd réseau de diffraction sont placés respectivement sur une des faces du guide planaire, les traits du réseau étant disposés perpendiculairement à la direction longitudinale du guide ;
- le 1er réseau et le 2nd réseau ont la même densité de traits ;
- le second réseau a une efficacité de diffraction variable de manière à uniformiser le flux optique sur la pupille de sortie ;
- la profondeur de modulation du second réseau est variable ;
- le second réseau comprend une couche mince diélectrique déposée sur le profil du réseau, ladite couche mince diélectrique ayant une épaisseur variable continûment.

Selon différents modes de réalisation particuliers du système optique planaire de l'invention :

- le premier réseau de diffraction est un réseau en réflexion et le second réseau est un réseau en réflexion ;
- le premier réseau de diffraction est un réseau en réflexion et le second réseau est un réseau en transmission ;
- le premier réseau de diffraction est un réseau en transmission et le second réseau est un réseau en réflexion
- le premier réseau de diffraction est un réseau en transmission et le second réseau est un réseau en transmission.

L'invention concerne également l'utilisation d'un système optique planaire selon l'un des modes de réalisation, pour transporter une image polychromatique à large champ de vision, comprenant les étapes suivantes :

- Diriger un faisceau incident vers le coupleur d'entrée du guide d'onde de manière à ce que ledit faisceau incident forme un angle d'incidence $i_0$ + $\Delta\theta$ avec une face du guide d'onde et soit diffracté par le 1er réseau et couplé à l'intérieur du guide avec un angle d'incidence interne supérieur à l'angle de réflexion totale interne et inférieur à un angle limite $\gamma$ de 80 degrés, ledit faisceau incident formant un angle d'incidence moyenne $i_0$ compris entre 30 degrés et 60 degrés, ayant un champ angulaire total 2*$\Delta\theta$ supérieur ou égal à 30 degrés, et une largeur de bande spectrale $\Delta\lambda$ supérieure ou égale à 100 nm,
- Guider le faisceau couplé à l'intérieur du guide par réflexion interne totale sur les faces internes du guide d'onde en direction du coupleur de sortie de manière à ce que le 2nd réseau de diffraction reçoive ledit faisceau couplé et soit apte à le diffracter dans l'ordre -1 pour l'extraire du guide et former un faisceau de sortie,
- Recevoir ledit faisceau de sortie extrait du guide d'onde par diffraction sur le 2nd réseau, ledit faisceau de sortie formant un angle de sortie $i_1$ $\pm$ $\Delta\theta'$ avec une face du guide d'onde (3), $i_1$ étant supérieur ou égal à 30 degrés, de champ angulaire total 2*$\Delta\theta'$ supérieur ou égal à 30 degrés, sur la bande spectrale $\Delta\lambda$.

Selon un mode d'utilisation préféré du système optique de l'invention, les directions moyennes du faisceau incident et du faisceau de sortie forment un angle compris entre 80 et 100 degrés.

Le système d'imagerie à guide d'onde de l'invention fonctionne sur une large gamme spectrale avec un champ visuel important ceci avec peu de contraintes sur le guide d'onde ou sur la fabrication des réseaux de diffraction.

Le principe est d'utiliser un réseau avec une plus petite densité de traits de manière à avoir une plus petite dispersion angulaire dans le guide pour les différentes longueurs d'onde.

La présente invention concerne également les caractéristiques qui ressortiront au cours de la description qui va suivre et qui devront être considérées isolément ou selon toutes leurs combinaisons techniquement possibles.

Cette description est donnée à titre d'exemple non limitatif et fera mieux comprendre comment l'invention peut être réalisée en référence aux dessins annexés sur lesquels :

- la figure 1 représente schématiquement en vue de côté un dispositif d'imagerie à guide d'onde planaire selon l'art antérieur et son principe de fonctionnement ;
- le graphique de la figure 2 représente l'indice de réfraction minimum du guide d'onde planaire en fonction de l'angle

**4**

d'incidence moyen $i_0$ du faisceau d'entrée par rapport à la normale à une face du guide d'onde ;

- la figure 3 représente schématiquement en vue de côté un système d'imagerie selon un 1$^{er}$ mode de réalisation de l'invention et son fonctionnement pour un point au centre du champ objet à une longueur d'onde ;
- la figure 4 représente schématiquement la dispersion d'un faisceau polychromatique lors de sa propagation dans un système d'imagerie à guide d'onde planaire et à réseaux de diffraction ;
- la figure 5 représente schématiquement le fonctionnement d'un système d'imagerie selon l'invention pour un point du champ objet et à une longueur d'onde ;
- la figure 6 représente schématiquement le fonctionnement d'un système d'imagerie selon l'invention pour deux points du champ objet à une longueur d'onde ;
- la figure 7 représente schématiquement le fonctionnement d'un système d'imagerie selon l'invention pour un point hors d'axe du champ objet à trois longueurs d'onde ;
- la figure 8 représente schématiquement en vue de côté un système d'imagerie selon un 2$^{nd}$ mode de réalisation de l'invention et son fonctionnement pour un point central du champ objet à une longueur d'onde ;
- la figure 9 représente schématiquement un système d'imagerie selon un 3$^{ème}$ mode de réalisation de l'invention et son fonctionnement pour un point central du champ objet à une longueur d'onde ;
- la figure 10 représente schématiquement un système d'imagerie selon un 4$^{ème}$ mode de réalisation de l'invention et son fonctionnement pour un point central du champ objet à une longueur d'onde.

L'invention concerne un système d'imagerie à guide d'onde fonctionnant sur une large gamme spectrale et sur un champ visuel important, qui ne nécessite pas l'utilisation de matériaux ni de traitements coûteux pour le guide d'onde ni pour la fabrication des réseaux de diffraction de couplage.

Les dispositifs antérieurs utilisent des réseaux à forte densité de traits pour que l'angle d'incidence du faisceau couplé dans le guide d'onde avec les faces planes du guide soit supérieur à l'angle de réflexion interne totale.

Contrairement aux dispositifs de l'art antérieur qui utilisent des réseaux de diffraction à forte densité de traits pour coupler les faisceaux optiques dans et hors du guide d'onde, le dispositif de l'invention utilise des réseaux de diffraction ayant une plus faible densité de traits. Cette faible densité de traits permet avantageusement de limiter la dispersion angulaire dans le guide pour les différentes longueurs d'onde.

Cependant, pour guider le faisceau couplé à l'intérieur du guide, il reste nécessaire que l'angle d'incidence du faisceau couplé dans le guide avec les faces internes du guide reste supérieur à l'angle limite de réflexion totale. L'utilisation du dispositif incliné par rapport au faisceau d'entrée avec un angle d'incidence important permet la diffraction dans l'ordre +1 du réseau d'entrée avec un angle d'incidence interne sur le guide d'onde qui dépasse l'angle de réflexion totale.

Il y a les mêmes contraintes de réflexion totale et de diffraction avec un angle limite d'incidence interne $\gamma$ d'environ 80 degrés.

Les paramètres du système d'imagerie sont les suivants. Soit $i_0$ l'angle d'incidence moyen sur le guide, le champ angulaire faisant $+/-\Delta\theta$, la bande spectrale de travail s'étend sur $\Delta\lambda = \lambda_3 - \lambda_1$, avec un angle d'incidence inférieur à l'angle limite $\gamma$ dans le guide, on arrive à des densités de traits minimales et maximales.

$$N_{\min} = \frac{1 - \sin(i_0 - \Delta\theta)}{\lambda_1}$$

$$N_{\max} = \frac{n * \sin(\gamma) - \sin(i_0 + \Delta\theta)}{\lambda_3}$$

Il n'y a de solutions que si Nmax>Nmin ce qui signifie pour l'indice de réfraction n du guide d'onde :

$$n \geq \frac{\frac{\lambda_3}{\lambda_1}\left(1 - \sin(i_0 - \Delta\theta)\right) + \sin(i_0 + \Delta\theta)}{\sin(\gamma)}$$

Dans ce cas on peut choisir une densité de traits moyenne :

$$N = \frac{N_{\max} + N_{\min}}{2}$$

Le graphique de la figure 2 représente l'indice de réfraction n minimum du guide d'onde planaire en fonction de l'angle d'incidence moyen $i_0$ du faisceau d'entrée par rapport à la normale à une face du guide d'onde, pour un système fonctionnant dans le domaine visible en pleine couleur du rouge au bleu : $\lambda_1$=450 nm, $\lambda_2$=630 nm avec un champ angulaire objet de $\Delta\theta$ =+/-15 degrés et un angle limite $\gamma$ égal à 80 degrés.

On voit donc que pour un angle d'incidence $i_0$ de l'ordre de 50 degrés par exemple l'indice n minimum est de l'ordre de 1,55 ce qui est une valeur très courante des plastiques, verres ordinaires et résines transparentes.

Si on prend un indice n=1,6 avec $i_0$ égal à 50 degrés, la densité de traits moyenne N est alors de 1005 tr/mm.

L'utilisation de réseaux 1 et 2 à faible densité de traits combinée à un angle d'incidence $i_0$ élevé permet donc de s'adapter aux contraintes des verres industriels les plus courants et de rendre le système compatible avec un fonctionnement sur un domaine spectral élargi. Les dispositifs antérieurs fonctionnent éventuellement à deux longueurs d'onde proches, mais ne peuvent pas fonctionner sur un domaine spectral large. Le dispositif de l'invention permet de transmettre des images sur un large domaine spectral, ce qui permet en particulier de transmettre des images en couleur RVB.

Pour les mêmes spécifications angulaires et spectrales on a besoin d'un indice de 1,6 et d'une densité de trait de 1005 tr/mm ce qui est beaucoup plus favorable. En effet, cette densité de traits disperse beaucoup moins les différentes longueurs d'ondes (qu'un réseau à 2900tr/mm), toutes les longueurs d'ondes bénéficient ainsi du phénomène de réflexion totale (sans perte d'énergie) à l'intérieur du guide d'onde. L'épaisseur du guide d'onde est généralement de l'ordre du millimètre. La longueur du guide d'onde est de l'ordre d'une dizaine de cm pour une application casque. Le diamètre des faisceaux et de la pupille dépendent fortement de la présence de systèmes optiques d'entrée et de sortie (oeil ou système optique) et des caractéristiques de ces systèmes optiques.

Les réseaux 1 et 2 sont donc optimisés de manière à permettre de coupler un faisceau de grande largeur spectrale et à grand champ dans un guide d'onde en matériau transparent d'indice relativement peu élevé (<1,7).

Avantageusement, la densité de traits du 1er réseau 1 est égale à la densité de traits du 2nd réseau 2, ce qui permet un fonctionnement polychromatique du système d'imagerie.

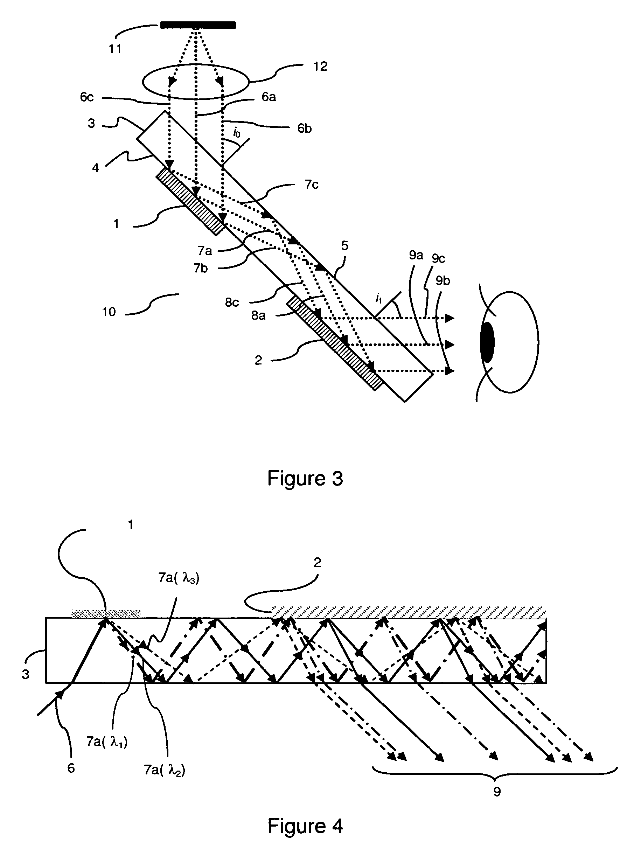

La figure 3 représente schématiquement un mode de réalisation préféré de l'invention et son fonctionnement pour un point central du champ. Le point central émet un faisceau optique, le système optique 12 forme l'image de l'objet et transmet les faisceaux 6a, 6b, 6c en direction du guide d'onde 3 et du réseau d'entrée 1. Le réseau 1 est un réseau à faible densité de traits qui diffracte le faisceau d'entrée dans l'ordre +1 de manière à ce que l'angle d'incidence du faisceau diffracté 7a, 7b, 7c par rapport aux faces internes du guide d'onde soit supérieur à l'angle de réflexion totale et inférieur à l'angle limite $\gamma$. Le faisceau 7a, 7b, 7c peut ainsi se propager sans atténuation par réflexion interne totale suivant la direction longitudinale du guide 3. Le second réseau de diffraction 2 est également un réseau à faible densité de traits. Le réseau 2 reçoit les faisceaux 8a, 8b, 8c et les diffracte dans l'ordre -1 de manière à ce que l'angle d'incidence des faisceaux diffractés soit inférieur à l'angle de réflexion totale : les faisceaux sont alors réfractés et couplés à l'extérieur du guide d'onde 3 et forment le faisceau 9a, 9b, 9c. Un système optique ou l'oeil de l'observateur permet de former une image du point central de l'objet à partir du faisceau 9a, 9b, 9c.

La figure 4 représente de manière accentuée la dispersion angulaire due à la diffraction d'un faisceau polychromatique (composé dans l'exemple des longueurs d'onde $\lambda_1$, $\lambda_2$ et $\lambda_3$. Les réseaux 1 et 2 induisent une dispersion angulaire fonction de la longueur d'onde. Toutefois, les réseaux 1 et 2 ayant une faible densité de traits, cette dispersion est réduite comparée à celle des systèmes utilisant des réseaux à forte densité de traits (> 2000 tr/mm). Dans l'exemple représenté figure 4, l'efficacité du réseau 2 d'extraction n'est pas maximale pour permettre l'extraction progressive du faisceau de sortie dans la direction longitudinale du guide.

Sur la figure 3, on observe que la direction moyenne du faisceau d'entrée 6a, 6b, 6c et la direction moyenne du faisceau de sortie 9a, 9b, 9c forment un angle d'environ 90 degrés. Le système permet ainsi de couder la direction propagation d'un faisceau optique. Ce coudage entre entrée et sortie a un avantage pratique supplémentaire : il permet de dégager un espace pour l'optique de collimation dans un système de type casque.

Dans la plupart des applications le réseau de sortie 2 devant l'oeil doit être transparent et non efficace pour la lumière provenant de la scène visuelle.

Avantageusement, un réseau 2 de sortie à efficacité variable dans la direction longitudinale du guide permet d'uniformiser l'énergie sur la pupille de sortie. La figure 4 représente schématiquement un réseau de sortie 2 d'efficacité variable en fonction de la position dans la direction de propagation du faisceau optique dans le guide d'onde 3.

Le premier réseau d'entrée 1 travaille dans l'ordre +1 et diffracte l'ensemble de faisceaux lumineux dans le guide au-delà de l'angle limite de réflexion totale permettant ainsi le transport de l'image dans le guide d'onde 3. Le second réseau de diffraction 2 de même densité de traits travaille à contrario dans l'autre ordre -1 pour restituer en sortie les faisceaux lumineux et les extraire du guide.

Dans un 1<sup>er</sup> mode de réalisation représenté schématiquement figure 3, le système est tel qu'avec les angles de fonctionnement, la sortie et l'entrée sont naturellement à 90°, ce qui offre des possibilités d'intégration accrues notamment dans les casques de visions (pilote, fantassin).

Les réseaux de diffraction d'entrée 1 et de sortie 2 sont optimisés pour offrir un flux lumineux le plus uniforme possible en sortie. Le réseau de sortie 2 peut être un réseau à efficacité de diffraction continument variable pour uniformiser l'intensité du faisceau de sortie sur le champ image.

Le système de l'invention fonctionne avantageusement sur une large gamme spectrale et avec des faisceaux de grande ouverture angulaire. Ces contraintes angulaires et spectrales sont relâchées en utilisant un design à guide d'onde comprenant deux réseaux de diffraction à faible densité de trait fonctionnant sous un angle d'incidence moyen important (de préférence >30°).

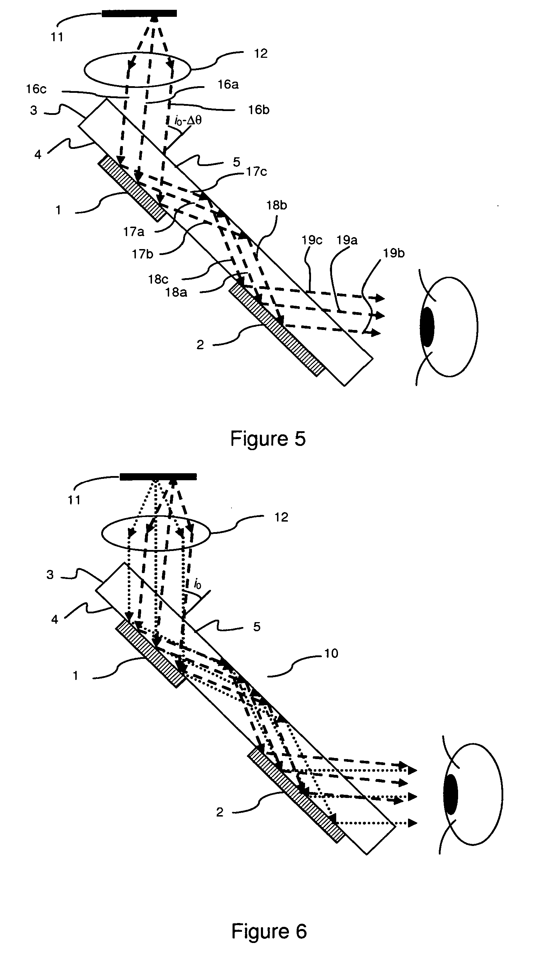

La figure 5 représente schématiquement le fonctionnement d'un système d'imagerie selon l'invention pour un point du champ objet et à une longueur d'onde. Le point objet est ici hors de l'axe de la lentille 12. Les faisceaux 16a, 16b, 16c à l'entrée du guide d'onde forment un angle d'incidence $i_0 - \Delta\theta$ avec la normale à la face d'entrée 5 dans le guide d'onde 3. Le réseau 1 fonctionne en réflexion pour diffracter le faisceau dans le guide d'onde 3 et former le faisceau 17a, 17b, 17c, qui se propage par réflexion interne totale sur la face 5 du guide 3. Le faisceau 18a, 18b, 18c reçu par le réseau 2 est diffracté pour être couplé à l'extérieur du guide en un faisceau 19a, 19b, 19c.

La figure 6 représente schématiquement le fonctionnement du système d'imagerie pour deux points du champ objet à une longueur d'onde. Les deux points de l'objet correspondent à des directions de sortie différentes, et permettent ainsi de former une image de l'objet à travers un système optique de réception (oeil de l'observateur ou lentille et détecteur).

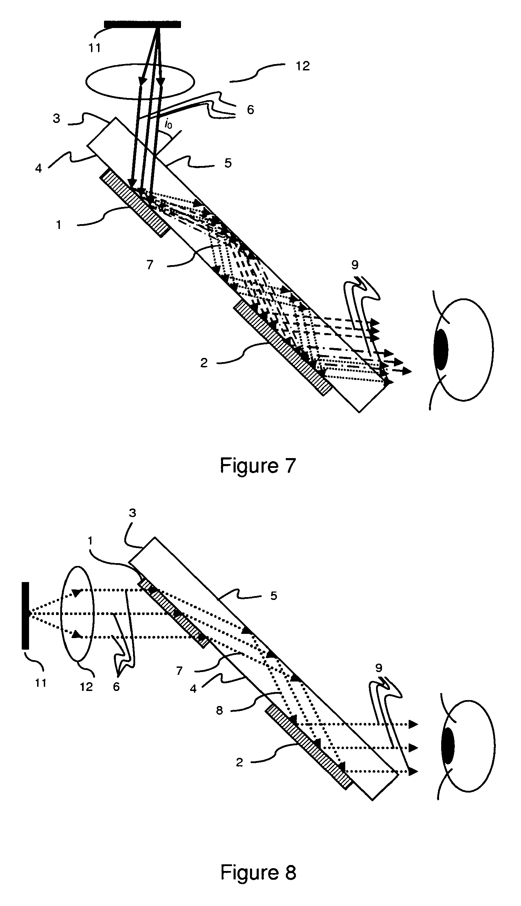

La figure 7 représente schématiquement le fonctionnement d'un système d'imagerie planaire pour un point hors d'axe du champ objet à trois longueurs d'onde $\lambda_1$, $\lambda_2$, $\lambda_3$. Comme indiqué plus haut, la faible densité de traits des réseaux 1, 2 permet au système d'avoir une large bande passante spectrale.

Selon un 1<sup>er</sup> mode de réalisation préféré de l'invention (Figure 3), le réseau 1 d'entrée et le réseau 2 de sortie du guide d'onde sont des réseaux de diffraction fonctionnant en réflexion. Le système selon ce 1<sup>er</sup> mode de réalisation permet avantageusement de couder le chemin optique, ce qui permet une meilleure intégration des systèmes optiques de collimation dans le cas d'application à encombrement réduit (casque pilote ou fantassin, réalité virtuelle).

La figure 8 représente schématiquement un système d'imagerie selon un 2<sup>nd</sup> mode de réalisation de l'invention. Dans ce 2<sup>nd</sup> mode de réalisation, le réseau 1 d'entrée fonctionne en transmission et le réseau 2 de sortie en réflexion.

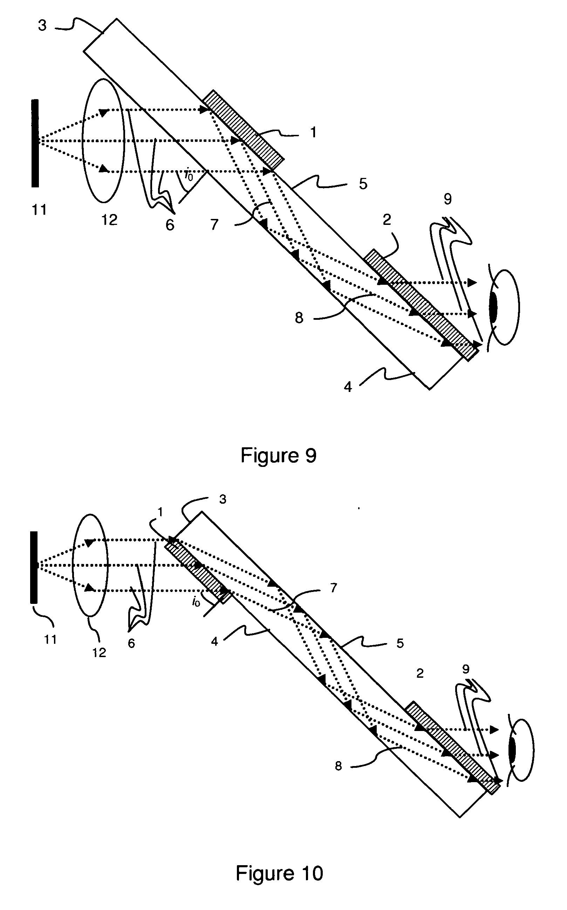

Selon un 3<sup>ème</sup> mode de réalisation de l'invention (Figure 9), le réseau 1 d'entrée fonctionne en réflexion et le réseau 2 de sortie en transmission.

Enfin, la figure 10 représente schématiquement un système d'imagerie selon un 4<sup>ème</sup> mode de réalisation, dans lequel le réseau 1 d'entrée et le réseau 2 de sortie du guide d'onde sont des réseaux de diffraction fonctionnant en transmission.

En résumé, nous proposons un système optique planaire compact d'imagerie par guide d'onde et réseaux de diffraction associé de préférence à une optique de collimation. Le système à guide d'onde est un système afocal transportant des images depuis une optique collimatrice vers une optique focalisante, l'oeil en particulier. Le système à guide d'onde, constitué d'un guide d'onde et de deux réseaux de diffraction, est spécifiquement utilisé à une incidence proche de 45° afin de pouvoir fonctionner sur une grande plage spectrale (le spectre visible) et sur une grande plage angulaire tout en utilisant des matériaux pour le guide d'onde très courant et des densités de trait courantes pour les réseaux de diffraction.

L'invention trouve une application particulièrement avantageuse dans un dispositif de visualisation dit « tête haute » (ou « head-up display » en anglais) dans lequel l'utilisateur a la possibilité de voir en regardant dans la même direction à la fois une image projetée et une scène de son environnement. Les dispositifs tête haute sont utilisés en particulier pour le pilotage d'avions, d'hélicoptères ou de tout autre aéronef.

## Revendications

1. Système optique planaire (10) d'imagerie polychromatique à large champ de vision angulaire comprenant :

   - un guide d'onde planaire (3) constitué d'une lame ayant deux faces (4, 5) planes et parallèles, le guide d'onde planaire (3) ayant une épaisseur de l'ordre du millimètre,
   - un coupleur d'entrée constitué d'un premier réseau de diffraction (1),
   - un coupleur de sortie constitué d'un second réseau de diffraction (2),
   - le système optique planaire (10) étant apte à recevoir un faisceau optique incident (6, 16) ayant un spectre optique de largeur spectrale $\Delta\lambda$, ($\Delta\lambda = \lambda_3 - \lambda_1$), un champ angulaire $\pm\Delta\theta$ et formant un angle d'incidence moyen

$i_0$ avec la normale à une face (4, 5) du guide d'onde (3),

- ledit 1$^{er}$ réseau (1) étant apte à coupler ledit faisceau incident (6, 16) dans le guide d'onde planaire (3) en un faisceau (7, 17) apte à se propager dans le guide d'onde (3) par réflexion interne totale sur les faces (4, 5) du guide (3), et le 2$^{nd}$ réseau (2) étant apte à recevoir le faisceau couplé et à diffracter ledit faisceau couplé hors du guide d'onde en un faisceau de sortie (9, 19),

**caractérisé en ce que** :

- le premier réseau (1) est apte à coupler un faisceau d'entrée (6, 16) d'angle d'incidence moyen $i_0$ compris entre 30 degrés et 60 degrés dans le guide d'onde (3) par diffraction dans l'ordre +1, ledit faisceau couplé (7, 17, 8, 18) formant un angle d'incidence interne supérieur à l'angle de réflexion totale interne et inférieur à un angle limite $\gamma$, et le second réseau (2) étant apte à recevoir le faisceau couplé (7, 17, 8, 18) et à le diffracter dans l'ordre -1 hors du guide d'onde (3) sous un angle de sortie moyen $i_1$ par rapport à la normale à une face (4, 5) de sortie du guide d'onde (3) compris entre 30 degrés et 60 degrés ;
- les réseaux (1, 2) sont des réseaux de diffraction à faible densité de traits, ayant un pas supérieur à la longueur d'onde d'utilisation ($\lambda_1$, $\lambda_3$), et
- l'indice de réfraction du guide d'onde (3) est inférieur à 1,65 sur le domaine spectral [$\lambda_1$, $\lambda_3$].

2. Système optique planaire d'imagerie selon la revendication 1, **caractérisé en ce que** la densité de traits est inférieure à 1200 traits /mm.

3. Système optique planaire selon l'une des revendications 1 à 2, **caractérisé en ce que** la densité de traits des réseaux (1, 2) est égale à N=1000 tr/mm, l'indice de réfraction du guide (3) égal à 1,6 et où l'angle d'incidence moyen $i_0$ du faisceau incident (6, 16) est de 50 degrés, l'angle limite $\gamma$ est de 80 degrés, la plage spectrale comprise au minimum entre 450 nm et 630 nm et le champ angulaire $2.\Delta\theta$ est de +/- 15 degrés.

4. Système optique planaire selon l'une des revendications 1 à 3, **caractérisé en ce que** le premier réseau de diffraction (1) et le second réseau de diffraction (2) sont placés respectivement sur une des faces (4, 5) du guide planaire (3), les traits du réseau (1, 2) étant disposés perpendiculairement à la direction longitudinale du guide (3).

5. Système optique planaire d'imagerie selon l'une des revendications 1 à 4, **caractérisé en ce que** le 1$^{er}$ réseau (1) et le 2$^{nd}$ réseau (2) ont la même densité de traits.

6. Système optique planaire selon l'une des revendications 1 à 4, **caractérisé en ce que** le second réseau (2) a une efficacité de diffraction variable de manière à uniformiser le flux optique sur la pupille de sortie.

7. Système optique planaire selon la revendication 6, **caractérisé en ce que** la profondeur de modulation du second réseau (2) est variable.

8. Système optique planaire selon la revendication 6, **caractérisé en ce que** le second réseau (2) comprend une couche mince diélectrique déposée sur le profil du réseau (2), ladite couche mince diélectrique ayant une épaisseur variable continûment.

9. Système optique planaire selon l'une des revendications 1 à 8, **caractérisé en ce que** le premier réseau de diffraction (1) est un réseau en réflexion et le second réseau (2) est un réseau en réflexion.

10. Système optique planaire selon l'une des revendications 1 à 8, **caractérisé en ce que** le premier réseau de diffraction (1) est un réseau en réflexion et le second réseau (2) est un réseau en transmission.

11. Système optique planaire selon l'une des revendications 1 à 8, **caractérisé en ce que** le premier réseau de diffraction (1) est un réseau en transmission et le second réseau (2) est un réseau en réflexion.

12. Système optique planaire selon l'une des revendications 1 à 8, **caractérisé en ce que** le premier réseau de diffraction (1) est un réseau en transmission et le second réseau (2) est un réseau en transmission.

13. Utilisation d'un système optique planaire selon l'une des revendications 1 à 12 pour transporter une image polychromatique à large champ de vision, comprenant les étapes suivantes :

- Diriger un faisceau incident (6, 16) vers le coupleur d'entrée du guide d'onde (3) de manière à ce que ledit faisceau incident (6, 16) forme un angle d'incidence $i_0 \pm \Delta\theta$ avec une face (4, 5) du guide d'onde (3) et soit diffracté par le 1$^{er}$ réseau (1) et couplé à l'intérieur du guide (3) avec un angle d'incidence interne supérieur à l'angle de réflexion totale interne et inférieur à un angle limite $\gamma$ de 80 degrés, ledit faisceau incident (6) formant un angle d'incidence moyenne $i_0$ compris entre 30 degrés et 60 degrés, ayant un champ angulaire total $2*\Delta\theta$ supérieure ou égal à 30 degrés, et une largeur de bande spectrale $\Delta\lambda$ supérieure ou égale à 100 nm,

- Guider le faisceau couplé (7, 17, 8, 18) à l'intérieur du guide (3) par réflexion interne totale sur les faces internes (4, 5) du guide d'onde (3) en direction du coupleur de sortie de manière à ce que le 2$^{nd}$ réseau de diffraction (2) reçoive ledit faisceau couplé et soit apte à le diffracter dans l'ordre -1 pour l'extraire du guide (3) et former un faisceau de sortie (9, 19),

- Recevoir ledit faisceau de sortie (9) extrait du guide d'onde (3) par diffraction sur le 2$^{nd}$ réseau (2), ledit faisceau de sortie (9) formant un angle de sortie $i_1 \pm \Delta\theta'$ avec une face (4, 5) du guide d'onde (3), $i_1$ étant supérieur ou égal à 30 degrés, de champ angulaire total $2*\Delta\theta'$ supérieure ou égale à 30 degrés, sur la bande spectrale $\Delta\lambda$.

**14.** Utilisation d'un système optique selon la revendication 13 **caractérisée en ce que** les directions moyennes du faisceau incident (6, 16) et du faisceau de sortie (9, 19) forment un angle compris entre 80 et 100 degrés.

**Patentansprüche**

**1.** Planares optisches System (10) zur polychromen Bildgebung mit großem Blickwinkel, umfassend:

- einen planaren Wellenleiter (3), der aus einer Platte mit zwei planparallelen Seiten (4, 5) besteht, wobei der planare Wellenleiter (3) eine Dicke im Millimeterbereich aufweist,
- einen Eingangskoppier, der aus einem ersten Beugungsgitter (1) besteht,
- einen Ausgangskoppler, der aus einem zweiten Beugungsgitter (2) besteht,
- wobei das planare optische System (10) dazu geeignet ist, um einen einfallenden optischen Strahl (6, 16) zu empfangen, der ein optisches Spektrum der Spektralbreite $\Delta\lambda$ ($\Delta\lambda = \lambda_3 - \lambda_1$) und einen Bildwinkel $\pm\Delta\theta$ aufweist und einen mittleren Einfallswinkel $i_0$ mit der Senkrechten auf einer Seite (4, 5) des Wellenleiters (3) bildet,
- wobei das 1. Gitter (1) dazu geeignet ist, um den einfallenden Strahl (6, 16) in dem planaren Wellenleiter (3) in einen Strahl (7, 17) zu koppeln, der dazu geeignet ist, um sich in dem Wellenleiter (3) durch interne Totalreflexion auf den Seiten (4, 5) des Leiters (3) zu verbreiten, und wobei das 2. Gitter (2) dazu geeignet ist, um den gekoppelten Strahl zu empfangen und den gekoppelten Strahl aus dem Wellenleiter heraus in einen Ausgangsstrahl (9, 19) zu beugen,

**dadurch gekennzeichnet, dass**:

- das erste Gitter (1) dazu geeignet ist, um einen Eingangsstrahl (6, 16) mit einem mittleren Einfallswinkel $i_0$ zwischen 30 Grad und 60 Grad in dem Wellenleiter (3) durch Beugung in der positiven 1. Ordnung zu koppeln, wobei der gekoppelte Strahl (7, 17, 8, 18) einen internen Einfallswinkel bildet, der größer als der interne Totalreflexionswinkel und kleiner als ein Grenzwinkel $\gamma$ ist, und wobei das zweite Gitter (2) dazu geeignet ist, um den gekoppelten Strahl (7, 17, 8, 18) zu empfangen und ihn in der negativen 1. Ordnung aus dem Wellenleiter (3) heraus in einem mittleren Ausgangswinkel $i_1$ im Verhältnis zur Senkrechen zu einer Ausgangsseite (4, 5) des Wellenleiters (3) zwischen 30 Grad und 60 Grad zu beugen;
- die Gitter (1, 2) Beugungsgitter mit geringer Strichdichte sind, die einen Abstand aufweisen, der größer als die Betriebswellenlänge ($\lambda_1$, $\lambda_3$) ist, und
- der Brechungsindex des Wellenleiters (3) in dem Spektralbereich [$\lambda_1$, $\lambda_3$] kleiner als 1,65 ist.

**2.** Planares optisches Bildgebungssystem nach Anspruch 1, **dadurch gekennzeichnet, dass** die Strichdichte kleiner als 1200 Striche/mm ist.

**3.** Planares optische System nach einem der Ansprüche 1 bis 2, **dadurch gekennzeichnet, dass** die Strichdichte der Gitter (1, 2) gleich N = 1000 Striche/mm ist, der Brechungsindex des Leiters (3) gleich 1,6 ist, und wobei der mittlere Brechungsindex $i_0$ des einfallenden Strahls (6, 16) gleich 50 Grad ist, der Grenzwinkel $\gamma$ gleich 80 Grad ist, der Spektralbereich mindestens zwischen 450 nm und 630 nm liegt, und der Bildwinkel 2,$\Delta\theta \pm 15$ Grad beträgt.

**4.** Planares optisches System nach einem der Ansprüche 1 bis 3, **dadurch gekennzeichnet, dass** das erste Beugungsgitter (1) und das zweite Beugungsgitter (2) jeweils auf einer der Seiten (4, 5) des planaren Leiters (3) angeordnet sind, wobei die Striche des Gitters (1, 2) rechtwinklig zur Längsrichtung des Leiters (3) angeordnet sind.

5. Planares optisches Bildgebungssystem nach einem der Ansprüche 1 bis 4, **dadurch gekennzeichnet, dass** das 1. Gitter (1) und das 2. Gitter (2) die gleiche Strichdichte aufweisen.

6. Planares optisches System nach einem der Ansprüche 1 bis 4, **dadurch gekennzeichnet, dass** das zweite Gitter (2) eine variable Beugungswirksamkeit aufweist, um den optischen Fluss auf die Ausgangspupille zu vereinheitlichen.

7. Planares optisches System nach Anspruch 6, **dadurch gekennzeichnet, dass** die Modulationstiefe des zweiten Gitters (2) variabel ist.

8. Planares optisches System nach Anspruch 6, **dadurch gekennzeichnet, dass** das zweite Gitter (2) eine dünne dielektrische Schicht umfasst, die auf dem Profil des Gitters (2) abgeschieden wird, wobei die dünne dielektrische Schicht eine durchgehend variable Dicke aufweist.

9. Planares optisches System nach einem der Ansprüche 1 bis 8, **dadurch gekennzeichnet, dass** das erste Beugungsgitter (1) ein Reflexionsgitter und das zweite Gitter (2) ein Reflexionsgitter ist.

10. Planares optisches System nach einem der Ansprüche 1 bis 8, **dadurch gekennzeichnet, dass** das erste Beugungsgitter (1) ein Reflexionsgitter und das zweite Gitter (2) ein Transmissionsgitter ist.

11. Planares optisches System nach einem der Ansprüche 1 bis 8, **dadurch gekennzeichnet, dass** das erste Beugungsgitter (1) ein Transmissionsgitter und das zweite Gitter (2) ein Reflexionsgitter ist.

12. Planares optisches System nach einem der Ansprüche 1 bis 8, **dadurch gekennzeichnet, dass** das erste Beugungsgitter (1) ein Transmissionsgitter und das zweite Gitter (2) ein Transmissionsgitter ist.

13. Verwendung eines planaren optischen Systems nach einem der Ansprüche 1 bis 12 zum Transportieren eines polychromen Bildes mit großem Blickfeld, umfassend die folgenden Schritte:

   - Richten eines einfallenden Strahls (6, 16) auf den Eingangskoppler des Wellenleiters (3), so dass der einfallende Strahl (6, 16) einen Einfallswinkel $i_0 \pm \Delta\theta$ mit einer Seite (4, 5) des Wellenleiters (3) bildet und von dem 1. Gitter (1) gebeugt wird und mit dem Innern des Leiters (3) mit einem internen Einfallswinkel gekoppelt ist, der größer als der interne Totalreflexionswinkel und kleiner als ein Grenzwinkel $\gamma$ von 80 Grad ist, wobei der Einfallswinkel (6) einen mittleren Einfallswinkel $i_0$ bildet, der zwischen 30 Grad und 60 Grad liegt, der einen Gesamtbildwinkel $2*\Delta\theta$ hat, der größer oder gleich 30 Grad ist, und eine Spektralbandbreite $\Delta\lambda$, die größer oder gleich 100 nm ist, aufweist,
   - Führen des gekoppelten Strahls (7, 17, 8, 18) im Innern des Leiters (3) durch interne Totalreflexion auf die internen Seiten (4, 5) des Wellenleiters (3) in Richtung auf den Ausgangskoppler, so dass das 2. Beugungsgitter (2) den gekoppelten Strahl empfängt und in der Lage ist, diesen in der negativen 1. Ordnung zu beugen, um ihn aus dem Leiter (3) zu entnehmen und einen Ausgangsstrahl (9, 19) zu bilden,
   - Empfangen des Ausgangsstrahls (9), der aus dem Wellenleiter (3) entnommen wird durch Beugung auf dem 2. Gitter (2), wobei der Ausgangsstrahl (9) einen Ausgangswinkel $i_1 \pm \Delta\theta'$ mit einer Seite (4, 5) des Wellenleiters (3) bildet, wobei $i_1$ größer oder gleich 30 Grad ist, mit einem Gesamtbildwinkel $2*\Delta\theta'$, der größer oder gleich 30 Grad ist, auf dem Spektralband $\Delta\lambda$.

14. Verwendung eines optischen Systems nach Anspruch 13, **dadurch gekennzeichnet, dass** die mittleren Richtungen des einfallenden Strahls (6, 16) und des Ausgangsstrahls (9, 19) einen Winkel bilden, der zwischen 80 und 100 Grad liegt.

**Claims**

1. A planar optical system (10) for wide field-of-view polychromatic imaging, comprising:

   · a planar waveguide (3) consisting of a plate having two plane and parallel faces (4, 5) the planar waveguide (3) having a thickness in the region of a millimeter;

· an entry coupler consisting of a first diffraction grating (1);
· an exit coupler consisting of a second diffraction grating (2);
· the planar optical system (10) being adapted to receive an incident optical beam (6, 16) having an optical spectrum of spectral width $\Delta\lambda$ ($\Delta\lambda = \lambda_3 - \lambda_1$) and an angular field $\pm\Delta\theta$ and defining a mean angle of incidence $i_0$ with the normal to a face (4, 5) of the waveguide (3);
· said first grating (1) being adapted to couple said incident beam (6, 16) into the planar waveguide (3) as a beam (7, 17) adapted to propagate in the waveguide (3) by total internal reflection at the faces (4, 5) of the waveguide (3), and the second grating (2) being adapted to receive the coupled beam and to diffract said coupled beam out of the waveguide as an exit beam (9, 19);

**characterized in that**:

· the first grating (1) is adapted to couple an entry beam (6, 16) of mean angle of incidence $i_0$ in the range 30 degrees to 60 degrees into the waveguide (3) by positive first order (+1) diffraction, said coupled beam (7, 17, 8, 18) defining an internal angle of incidence greater than the angle of total internal reflection and less than a limit angle $\gamma$, and the second grating (2) being adapted to receive the coupled beam (7, 17, 8, 18) and to diffract it by negative first order (-1) diffraction out of the waveguide (3) at a mean exit angle $i_1$ relative to the normal to an exit face (4, 5) of the waveguide (3) in the range 30 degrees to 60 degrees ;.
the gratings (1, 2) are diffraction gratings of low line density, having a pitch greater than the wavelength of use ($\lambda_1$, $\lambda_3$), and
the refractive index of the waveguide (3) is less than 1.65 over the spectral range [$\lambda_1$, $\lambda_3$].

**2.** A planar optical system according to claim 1, **characterized in that** the line density is less than 1200 lines/mm.

**3.** A planar optical system according to any one of claims 1 to 2, **characterized in that** the line density of the gratings (1, 2) is equal to N = 1000 lines/mm, the refractive index of the waveguide (3) being equal to 1.6, and wherein the mean angle of incidence $i_0$ of the incident beam (6, 16) is 50 degrees, the limit angle $\gamma$ is 80 degrees, the spectral range is at least 450 nm to 630 nm and the angular field $2.\Delta\theta$ is $\pm15$ degrees.

**4.** A planar optical system according to any one of claims 1 to 3, **characterized in that** the first diffraction grating (1) and the second diffraction grating (2) are placed on respective faces (4, 5) of the planar waveguide (3), the lines of the grating (1, 2) being disposed perpendicularly to the longitudinal direction of the waveguide (3).

**5.** A planar optical system according to any one of claims 1 to 4, **characterized in that** the first grating (1) and the second grating (2) have the same line density.

**6.** A planar optical system according to any one of claims 1 to 4, **characterized in that** the second grating (2) has a diffraction efficiency that varies so as to render the optical flux uniform over the exit pupil.

**7.** A planar optical system according to claim 6, **characterized in that** the depth of modulation of the second grating (2) varies.

**8.** A planar optical system according to claim 6, **characterized in that** the second grating (2) includes a thin dielectric layer deposited on the profile of the grating (2), said thin dielectric layer having a continuously varying thickness.

**9.** A planar optical system according to any one of claims 1 to 8, **characterized in that** the first diffraction grating (1) is a reflection grating and the second grating (2) is a reflection grating.

**10.** A planar optical system according to any one of claims 1 to 8, **characterized in that** the first diffraction grating (1) is a reflection grating and the second grating (2) is a transmission grating.

**11.** A planar optical system according to any one of claims 1 to 8, **characterized in that** the first diffraction grating (1) is a transmission grating and the second grating (2) is a reflection grating.

**12.** A planar optical system according to any one of claims 1 to 8, **characterized in that** the first diffraction grating (1) is a transmission grating and the second grating (2) is a transmission grating.

**13.** Use of a planar optical system according to any one of claims 1 to 12 to transport a wide field-of-view polychromatic image, comprising the following steps:

· directing an incident beam (6, 16) towards the entry coupler of the waveguide (3) so that said incident beam (6, 16) defines an angle of incidence $i_0 \pm \Delta\theta$ with a face (4, 5) of the waveguide (3) and is diffracted by the first grating (1) and coupled into the interior of the waveguide (3) with an internal angle of incidence greater than the angle of total internal reflection and less than a limit angle $\gamma$ of 80 degrees, said incident beam (6) defining a mean angle of incidence $i_0$ in the range 30 degrees to 60 degrees, having a total angular field $2*\Delta\theta$ greater than or equal to 30 degrees, and a having spectral bandwidth $\Delta\lambda$, greater than or equal to 100 nm;

· guiding the coupled beam (7, 17, 8, 18) towards the exit coupler in the interior of the waveguide (3) by total internal reflection at the internal faces (4, 5) of the waveguide (3) so that the second diffraction grating (2) receives said coupled beam and is adapted to diffract it by negative first order (-1) diffraction to extract it from the waveguide (3) and form an exit beam (9, 19);

· receiving said exit beam (9) extracted from the waveguide (3) by diffraction at the second grating (2), said exit beam (9) defining an exit angle $i_1 \pm \Delta\theta'$ with a face (4, 5) of the waveguide (3), $i_1$ being greater than or equal to 30 degrees, and having total angular field $2*\Delta\theta'$ greater than or equal to 30 degrees over the spectral band $\Delta\lambda$.

14. Use according to claim 13 of an optical system, **characterized in that** the mean directions of the incident beam (6, 16) and of the exit beam (9, 19) define an angle in the range 80 degrees to 100 degrees.

Figure 1                     Art antérieur

Figure 2

Figure 3

Figure 4

Figure 5

Figure 6

Figure 7

Figure 8

Figure 9

Figure 10

**EP 2 460 037 B1**

## RÉFÉRENCES CITÉES DANS LA DESCRIPTION

**Documents brevets cités dans la description**

- US 4711512 A
- US 20030202247 A
- US 20050002611 A